(19) Europäisches Patentamt
European Patent Office
Office européen des brevets

(11) Publication number: **0 394 570 A1**

# (12) EUROPEAN PATENT APPLICATION

(21) Application number: **89304070.9**

(51) Int. Cl.[5]: **G02F 1/133**

(22) Date of filing: **24.04.89**

(43) Date of publication of application: **31.10.90 Bulletin 90/44**

(84) Designated Contracting States: **DE FR GB IT**

(71) Applicant: **SEIKO EPSON CORPORATION**
**4-1, Nishishinjuku 2-chome**
**Shinjuku-ku Tokyo-to(JP)**

(72) Inventor: **Iijima, Chiyoaki**
**c/o Seiko Epson Corporation 3-5 Owa 3-chome**
**Suwa-shi Nagano-ken(JP)**
Inventor: **Sato, Yuzuru**
**c/o Seiko Epson Corporation 3-5 Owa 3-chome**
**Suwa-shi Nagano-ken(JP)**
Inventor: **Wada, Keiji**
**c/o Seiko Epson Corporation 3-5 Owa 3-chome**
**Suwa-shi Nagano-ken(JP)**
Inventor: **Okumura, Osamu**
**c/o Seiko Epson Corporation 3-5 Owa 3-chome**
**Suwa-shi Nagano-ken(JP)**
Inventor: **Kamata, Satoshi**
**c/o Seiko Epson Corporation 3-5 Owa 3-chome**
**Suwa-shi Nagano-ken(JP)**

(74) Representative: **Caro, William Egerton et al**
**J. MILLER & CO. Lincoln House 296-302 High Holborn**
**London WC1V 7JH(GB)**

## (54) An electro-optical device.

(57) An electro-optical device comprises: a first liquid crystal (10) cell having a first liquid crystal layer (13) positioned between electrode substrates (11, 12) which are opposed to each other; at least one second liquid crystal cell (20) having a second liquid crystal layer (23) positioned between two substrates (21, 22) which are opposed to each other; and electrodes (21a, 22a) which are disposed on the facing surfaces of the two substrates of the second liquid crystal cell.

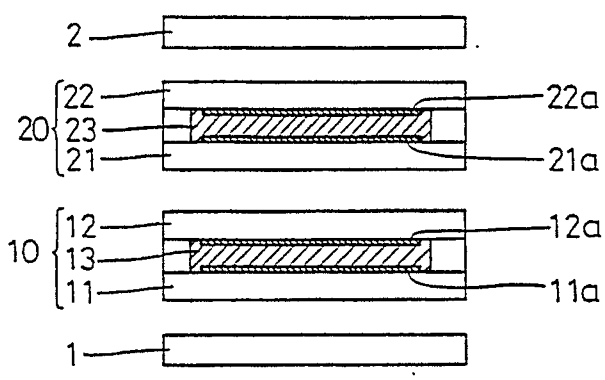


Fig. 1

EP 0 394 570 A1

# AN ELECTRO-OPTICAL DEVICE

This invention relates to an electro-optical device and, more especially, this invention relates to an electro-optical device such for example as a liquid crystal display device employing liquid crystal cells wherein liquid crystal is supported by substrates.

Liquid crystal display devices having first and second liquid crystal cells are known. In the known liquid crystal display devices, a display is provided in the first liquid crystal cell by applying the voltage to the first liquid crystal cell. A display is not provided in the second liquid crystal cell and the second liquid crystal cell does not have a voltage applied to it. The first and the second liquid crystal cells are disposed in the facing surfaces of a pair of polarising plates, and a black and white display having a high contrast is sought. However, the refractive index anisotropies Δn of the first and second liquid crystal cells are changed according to temperature, so that the appearance of the liquid crystal display device is not white, but is coloured green or red, the colour being changed according to the properties of the first and second liquid crystal cells or the property of the liquid crystal. Further, if the thickness d of the liquid crystals of the first and second liquid crystal cells are not a predetermined value, due to manufacturing error, then the display is coloured in the same way.

The present invention aims to obviate or reduce the above mentioned problems by providing an electro-optical device having an excellent display irrespective of a change in the surrounding temperature or of an error in the liquid crystal thickness.

According to the present invention, when the voltage is applied to the electrode of the second liquid crystal cell, the molecule axis direction of the liquid crystal of the second liquid crystal cell is changed according to the applied voltage. It is thus possible to change the eccentricities and the major axis direction of oval polarising light which passes the second liquid crystal cell. Therefore, a predetermined voltage may be applied to the electrode of the second liquid crystal cell, appropriate to a change of the surrounding temperature or an error of the liquid crystal thickness, in order to prevent unwanted colour in the display.

Accordingly, the present invention provides an electro-optical device comprising: a first liquid crystal cell having a first liquid crystal layer positioned between electrode substrates which are opposed to each other, at least one second liquid crystal cell having a second liquid crystal layer positioned between two substrates which are opposed to each other, and electrodes which are disposed on the facing surfaces of the two substrates of the second liquid crystal cell.

Preferably, there are at least two of the second liquid crystal cells.

The contacted substrates of the adjacent liquid crystal cells may be integrally formed as one substrate.

If desired, two or more electrodes may be provided at at least one of the opposing substrates of at least one of the second liquid crystal cells.

The electro-optical device may be one in which the product (Δn.d) of the refractive index anisotropy "n" and the thickness "d" of the liquid crystal layer of the second liquid crystal cell in a non-voltage condition is the same as or more than Δn.d of the first liquid crystal cell in a non-voltage condition.

Embodiments of the invention will now be described solely by way of example and with reference to the the accompanying drawings, in which:-

Figure 1 is a schematic sectional view of an electro-optical device in the form of a liquid crystal display device;

Figure 2 illustrates the relation between the aligning direction of the liquid crystal molecules and the polarising axis of the polariser;

Figure 3 illustrates the relation between suitable first and second cells;

Figure 4 is a graph showing the strength of the transmitting light in a suitable liquid crystal display device;

Figures 5, 6, 7 and 8 are explanatory views showing the relation between first and second cells suitable for the liquid crystal display device;

Figures 9, 10 and 11 are plan views showing the arrangement of the second cell;

Figure 12 is a schematic sectional view showing the inclusion of a third liquid crystal cell;

Figures 13 and 14 (A) to 14 (D) are graphs showing the strength of the transmitting light;

Figure 15 is a graph showing the relation between the voltage applied to the first cell and the strength of the transmitting light in a normal positive mode;

Figure 16 is a graph showing the relation between the voltage applied to the first cell and the strength of the transmitting light in a normal negative mode;

Figures 17 (A) to 17 (E) are graphs showing the relation between the voltage applied to the first cell and the strength of the transmitting light;

Figure 18 is a schematic sectional view of a prior electro-optical device in the form of a liquid crystal display device; and

Figure 19 is a graph showing the strength of the transmitting light in the prior liquid crystal display device shown in Figure 18.

Referring now to the drawings, Figure 1 is a sectional view of one embodiment of an electro-optical device of the present invention. In Figure 1, there are shown a lower polarising plate 1, an upper polarising plate 2, and a first liquid crystal cell 10 (hereinafter referred to as the "first cell") for causing a display in dependence on a voltage application. In the first cell 10, electrodes 11a and 12a are formed on the respective facing surfaces of a lower electrode substrate 11 and an upper electrode substrate 12. A first twisted nematic liquid crystal 13 is supported by the upper and lower electrode substrates 11, 12.

Figure 1 also shows a second liquid crystal cell 20 (hereinafter referred to as the "second cell"). In the second cell 20, electrodes 21a and 22a are respectively formed on the facing surfaces of a lower electrode substrate 21 and an upper electrode substrate 22. A second twisted nematic liquid crystal 23 is supported by the upper and lower electrode substrates 21, 22.

Referring now to Figure 2, there is shown the relation among respective shafts or axes according to the embodiment shown in Figure 1. The molecule direction of the liquid crystal attached to the substrate is shown as the rubbed direction.

In Figure 2, R11 and R12 show the directions in which the lower electrode substrate 11 and the upper electrode substrate 12 of the first cell 10 are rubbed. R21 and R22 show the directions in which the lower electrode substrate 21 and the upper electrode substrate 22 of the second cell 20 are rubbed. The direction R12 in which the upper electrode substrate 12 of the first cell 10 is rubbed forms an angle with the direction R21 in which the lower electrode substrate 21 of the second cell 20 is rubbed. T1 shows the amount and direction of the twisted angle of the liquid crystal molecule in the first cell 10. T2 shows the amount and direction of the twisted angle of the liquid crystal molecule in the second cell 20. P1 and P2 show the directions of the polarising axis (absorbing axis) of the lower polarising plate 1 and the upper polarising plate 2. The direction P1 in which the lower polarising plate 1 is polarised forms an angle $\theta 1$ with the direction R11 in which the lower electrode substrate 11 is rubbed. The direction P2 in which the upper polarising plate 2 is polarised forms an angle $\theta 2$ with the direction R22 in which the upper electrode substrate 22 is rubbed. Further, the liquid crystal molecules in respective cells are twisted from the upper side towards the lower side.

By applying selective and non-selective voltages under 1/100 duty driving, the condition where the transmitted amount is large is indicated as the "OFF condition" and the condition where the transmitted amount is small is indicated as the "ON condition". It will be appreciated that the electro-optical device of the present invention is not limited to being driven under 1/100 duty.

The materials of the liquid crystal of the first and second cells are composed of phenyl cyclohexane or biphenyl cyclohexane system mixed nematic liquid crystal or

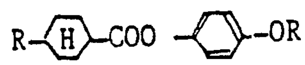

where R is an alkyl group, and R′ is an alkyl group. Further, the material of the liquid crystal of the first cell may be the same as or different from the material of the liquid crystal of the second cell. To obtain a twisted liquid crystal molecule in the first and second cells, CB-15 (made by the British Drug Houses Company) or S-811 (made by the Merck Company) is used as an optical active agent.

In the liquid crystals of the first and the second cells, conditions such as the respective twisted angles and the amount of Δ n.d are not limited. However, in order to obtain an excellent display, as mentioned above, the condition of the second cell should be changed according to the condition of the first cell so that the eccentricity of the respective wavelength and the difference of the major axis of the elliptically polarised light which are generated in the first cell can be restored by the second cell. In order to obtain an excellent display, the following are examples of the conditions of the first and second cells.

Condition (a)

In Figures 1 and 2, for example, the liquid crystal molecule of the first cell 10 is twisted to the left by an angle T1 of approximately 200°, Δ n.d is approximately 0.9 μm, the angle θ is approximately 90°, and the

angles $\theta 1$ and $\theta 2$ are from 30° to 60°. When the relation between the twisted angle T2 of the liquid crystal and Δ n.d of the second cell 20 is in the range shown by the oblique line of Figure 3, an excellent display can be obtained. In particular, a better display can be obtained at the centre than at the periphery, within the range.

As a first example, when the left twist angle T1 of the liquid crystal material of the first cell is approximately 200°, Δ n.d is approximately 0.9 µm, the angle $\theta$ is 90° and the angles $\theta 1$ and $\theta 2$ are 40°, respectively, then the right twist angle T2 of the liquid crystal material of the second cell 20 is approximately 140° and Δ n.d is approximately 0.7 µm. In this case, Figure 4 shows the spectrum of the outer appearance of the liquid crystal display device as shown at the point A in Figure 3. In Figure 4, the curve I indicates the "OFF condition" and the curve II indicates the "ON condition".

As a second example, when the left twist angle T1 of the liquid crystal material of the first cell 10 is approximately 200°, Δ n.d is approximately 0.9 µm, the angle $\theta$ is approximately 90°, the angle $\theta 1$ is approximately 50° and the angle $\theta 2$ is approximately 40°, then the right twist angle T2 of the liquid crystal material of the second cell 20 is approximately 200° and Δ n.d is 0.9 µm.

As a third example, when the left twist angle T1 of the liquid crystal material of the first cell 10 is approximately 200°, Δ n.d is approximately 0.9 µm, the angle $\theta$ is approximately 90° and the angles $\theta 1$ and $\theta 2$ are approximately 40° respectively, the right twist angle T2 of the liquid crystal material of the second cell 20 is approximately 260°, and Δ n.d is approximately 0.8 µm. In the above mentioned first, second an third condition examples, an excellent display can be obtained.

Condition (b)

When the left twist angle T1 of the liquid crystal of the first cell 10 is approximately 250°, Δ n.d is approximately 0.9 µm, the angle $\theta$ is approximately 90°, and the angles $\theta 1$ and $\theta 2$ are in the range of 30° to 60° respectively, if the twist angle T2 and Δ n.d of the second cell 20 are in the range of the oblique line of Figure 3, then a white display is obtained in the "OFF condition" and a black display is obtained in the "ON condition". Thus, an excellent liquid crystal display device can be obtained.

As a fourth example, when the left twist angle T1 of the liquid crystal material of the first cell is approximately 250°, Δ n.d is approximately 0.9 µm, the angle $\theta$ is approximately 90°, the angles $\theta 1$ and $\theta 2$ are approximately 40° respectively, then the right twist angle T2 of the liquid crystal material of the second cell 20 is approximately 160° and Δ n.d is approximately 0.8 µm.

As a fifth example, when the left twist angle T1 of the liquid crystal material of the first cell 10 is approximately 250°, Δ n.d is approximately 0.9 µm, the angle $\theta$ is approximately 90°, and the angles $\theta 1$ and $\theta 2$ are approximately 40° respectively, then the right twist angle T2 of the liquid crystal material of the second cell 20 is approximately 360° and Δ n.d is approximately 1.0 µm.

As a sixth example, when the left twist angle T1 of the liquid crystal material of the first cell 10 is approximately 170°, and Δ nd is approximately 0.7 µm and the angle $\theta$ is approximately 90°, the angles $\theta 1$ is approximately 40°, and the angle $\theta 2$ is approximately 50°, then the right twist angle T2 of the liquid crystal material of the second cell 2 is approximately 170° and the Δ n.d is 0.7 µm.

Condition (c)

When the left twist angle T1 of the liquid crystal material of the first cell 10 is approximately 120°, Δ n.d is approximately 0.9 µm, the angle $\theta$ is approximately 90°, and the angles $\theta 1$ and $\theta 2$ are in the range of 30° and 60° respectively, then the relation between the twist angle T2 and Δ n.d of the liquid crystal material of the second cell is in the range of the oblique line of Figure 6.

Condition (d)

When the left twist angle T1 of the liquid crystal material of the first cell is approximately 200°, Δ n.d is approximately 0.6 µm, the angle 8 is approximately 90°, and the angles $\theta 1$ and $\theta 2$ are in the range of 30° to 60° respectively, then the relation between the twist angle T2 and Δ n.d of the liquid crystal material of the second cell is in the range of the oblique line in Figure 7.

Condition (e)

When the left twist angle T1 of the liquid crystal material of the first cell 10 is approximately 200°, Δ n.d is approximately 1.5 μm, the angle θ is approximately 90°, and the angles θ1 and θ2 are in the range of 30° to 60° respectively, then the relation between the twist angle T2 and Δ n.d of the liquid crystal of the second cell is in the range of the oblique line of Figure 8.

As mentioned above, when the ambient temperature of the liquid crystal display device is changed, the value of the refractive index anisotropy Δn is changed and the display portion is coloured, so that it is impossible to provide an excellent black and white display. Also, if the thickness d of the liquid crystal layer of the first and second cells is not a predetermined thickness, it is impossible to provide an excellent black and white display.

In the present invention and as shown in Figure 1, the electrodes 21a and 22a are provided in the second cell 20. By applying a predetermined voltage to the electrodes 21a and 22a, the aligning condition of the liquid crystal material of the second cell 20 is changed, and the actual value of Δ n is adjusted so as to correspond to the value Δ n.d of the first cell 10. Thus, the colour can be omitted and the contrast can be increased. Further, the display portion can be changed to or maintained at an appropriate colour.

The number and the construction of the electrodes 21a and 22a of the second cell 20 are appropriate and each electrode is provided at respective substrates 21 and 22, or a plurality of electrodes may be provided at at least one of the substrates. As shown in Figure 9, at least the display region of the first cell is covered with a portion where the electrode 21a is overlapped by the electrode 22a. Otherwise, as shown in Figures 10 or 11, the portion of the display region may be covered with the portion where the electrode 21a is overlapped by the electrode 22a.

Figures 9 to 11 are views from the top of the liquid crystal display device and they show the construction of the electrodes 21a and 22a of the second cell 20. S1 to S3 show the display region of the first cell 10.

As shown in Figure 9, when the upper and lower substrates in the second cell 20 each have one electrode, and the portion where the both electrodes are overlapped is broader than the display portion S1 of the first cell, then an appropriate voltage is applied between the upper and lower electrodes of the second cell, whereby the colour of the display portion is entirely omitted and the contrast can be increased.

As shown in figure 10, when the upper and lower substrates in the second cell each have one electrode, and the portion where the both electrodes are overlapped is narrower than the display portion S2 of the first cell, then an appropriate voltage is applied between the upper and lower electrodes of the second cell, whereby the contrast in the overlapped portion can be increased.

As shown in Figure 11, when at least one of the upper and lower electrodes of the second cell has two or more electrodes, and the portion where the respective electrodes are overlapped is broader than the display region S3 of the first cell, an appropriate voltage is applied between the upper and lower electrodes, the contrast can be increased at an appropriate portion of the overlapped portion.

In Figures 9 to 11, if the amount of change of the refractive index anisotropy Δ n of the first cell is different from that of the second cell by the effect of the change of the temperature, when the temperature is low or high, the colour is not white in the "OFF condition". Therefore, even if the colour is changed in the "OFF condition" due to high or low temperature, the refractive index anisotropy Δ n of the first cell is changed to an appropriate value by the voltage applied between electrodes of the second cell, thereby enabling a white display to be obtained.

In Figures 9 to 11, the electrode terminals of the upper and lower substrates of the second cell are drawn from one of the upper and lower substrates by a conductor. In this case, the same effects can be obtained.

As shown in Figure 12, when a cell which is the same as the second cell is added as a third liquid crystal cell 30 (hereinafter referred to as the "third cell") to the liquid crystal display device shown in Figure 1, since the voltages applied to the third and second cells can be adjusted, it is possible to omit the colour of the display region. In this case, it is preferable that the twisted direction of the liquid crystal of at least one of the second and third cells 20, 30 is different from that of the first cell 10. Furthermore, the positional relationship among the first to third cells is not limited. Also, it is possible to provide three or more of the same liquid crystal cells as the second cell. In Figure 12 the third liquid crystal cell 30 has electrode substrates 31, 32, electrodes 31a, 32a, and a liquid crystal 33.

In Figures 1 to 12, the adjacent substrates of the adjacent cells, for example the upper substrate 12 of the first cell 10 and the lower substrate 21 of the second cell 20, may be integrally formed as one substrate, or they may be optically adhered to each other. The adjacent substrates of the adjacent cells may be adhered by thermal pressure, using polyvinyl butyral film which is obtained with an embossed finish.

Alternatively, the adjacent substrates may be adhered by epoxy resin, urethane adhesion or acrylic ultra-violet adhesion. When the adjacent substrates of the adjacent cells are made of one substrate or are adhered to each other, it is possible to reduce reflection on the boundary surface of the adjacent cells.

In order to facilitate a full and complete understanding of the invention, reference will now be made to the following Examples, which are given for illustrative purposes only.

## EXAMPLE I

In Figure 2, the first cell comprises a liquid crystal wherein the phase change temperature TNI is about 100° C and the refractive index anisotropy Δ n is about 0.100 at 40° C. The second cell 20 comprises a liquid crystal wherein TNI is about 60° and the refractive index anisotropy Δ n is 0.100 at 40°. The respective axes are composed of the construction given in the second Condition example of the Condition (a) above, and Δ n.d of the respective cells is 0.9 µm at about 40° C. However, Δ n.d of the first and second cells is 0.110 and 0.124 respectively at 0° C. Δ n.d is shown in the Table 1. In the following Tables, the units of the cell thickness d and Δ n.d are in µm, and for convenience the units are omitted in the Tables.

TABLE 1

| | first cell | second cell |
|---|---|---|
| | $T_{NI}$ = 100° C | $T_{NI}$ = 60° C |
| Δnd (40° C) | 0.900 | 0.900 |
| Δnd (0° C) | 0.994 | 1.116 |

An excellent uncoloured black and white display is obtained at the temperature of 40° C, but the colour is generated at the temperature of 0° C and the required excellent black and white display is not obtained. When an appropriate voltage is applied to the electrodes 21a and 22a of the second cell 20, Δ n.d is apparently reduced, so that an excellent uncoloured black and white display is obtained.

## EXAMPLE II

TNI of the first cell 10 is about 60° and TNI of the second cell 20 is about 100° C. The respective axes are composed of the construction given in the second Condition example of the Condition (a) above. Δ n.d of the respective cells are set to 0.900, respectively at 0° C, but they are changed to the following values at about 40° C.

TABLE 2

| | first cell | second cell |
|---|---|---|
| | $T_{NI}$ = 60° C | $T_{NI}$ = 100° C |
| Δn•d (0° C) | 0.900 | 0.900 |
| Δn•d (40° C) | 0.726 | 0.814 |

An excellent black and white display was not obtained at the temperature of 40° C. When an appropriate voltage was applied to the second cell, an excellent black and white display was obtained. The spectrum of black is shown in Figure 13, when the voltage is applied to the second cell. In Figure 13, I shows the spectrum at about 0° C, II shows the spectrum at about 40° C, and II shows the spectrum when a voltage is applied to the second cell at about 40° C.

**EXAMPLE III**

The first cell comprises a liquid crystal wherein TNI is 100° C and the second cell comprises a liquid crystal wherein TNI is 60° C. The respective axes have the construction of the first condition example of Condition (a) above. Δ n.d of the respective cells are set to 0.900 and 0.700 respectively at about 40° C, but they are changed to the following values at about 0° C.

TABLE 3

| | first cell | second cell |
|---|---|---|
| | $T_{NI}$ = 100° C | $T_{NI}$ = 60° C |
| Δnd (40° C) | 0.900 | 0.700 |
| Δnd (0° C) | 0.994 | 0.868 |

An excellent uncoloured black and white display was not obtained at the temperature of 0° C. An appropriate voltage applied to the second cell gave an excellent uncoloured black and white display.

**EXAMPLE IV**

The first cell comprises a liquid crystal wherein TNI is 60° C, and the second cell comprises a liquid crystal wherein TNI is 100° C. The respective axes have the construction of the first condition example of Condition (a) above. Δ n.d are set to 0.900 and 0.700, but they were changed to the values shown in Table 4 at about 40° C.

TABLE 4

| | first cell | second cell |
|---|---|---|
| | $T_{NI}$ = 60° C | $T_{NI}$ = 100° C |
| Δnd (0° C) | 0.900 | 0.700 |
| Δnd (40° C) | 0.726 | 0.633 |

An excellent uncoloured black and white display was not obtained at the temperature of 40° C. An appropriate voltage applied to the second cell gave an excellent uncoloured black and white display.

**EXAMPLE V**

In the liquid crystal display devices of Figures 1 and 2, the respective axes are composed of the constructions of the first and second condition examples of Condition (a) above, and the construction of the fourth example of Condition (b) above. Even if the thickness d of the liquid crystal of the second cell 20 are not of a predetermined value and are the values shown in Table 5, if an appropriate voltage is applied to the second cell, an excellent black and white display is obtained.

Figures 14 (A) to 14 (D) show the black spectrum of liquid crystals A to D shown in Table 5. In Figures 14 (A) to 14 (D), I shows the spectrum when the thickness d of the liquid crystal is a predetermined value, II shows the spectrum when the actual thickness d is different from the predetermined value, and III shows the spectrum when a voltage is applied to the second cell, when the actual thickness d is different from the predetermined value.

## EXAMPLE VI

The thickness d of the liquid crystal of the first cell 10 are different from the predetermined values as shown in Table 6. The same experiment as that of Example V is conducted. As a result, a voltage is applied to the second cell, thereby to obtain an excellent display in the same way as the above Examples.

TABLE 5

| | | first cell | second cell | | | | |
|---|---|---|---|---|---|---|---|
| The Condition (a) | | Δnd | Δn | d predetermined value | d actual value | Δnd predetermined value | Δnd actual value |
| A | first example of condition a) | 0.9 | 0.100 | 7.0 | 7.2 | 0.70 | 0.72 |
| B | first example of condition a) | 0.9 | 0.100 | 7.0 | 7.3 | 0.70 | 0.73 |
| C | second example of condition a) | 0.9 | 0.125 | 7.2 | 7.4 | 0.90 | 0.925 |
| D | fourth example of condition b) | 0.9 | 0.100 | 8.0 | 8.2 | 0.80 | 0.82 |

TABLE 6

| | | second cell | first cell | | | | |
|---|---|---|---|---|---|---|---|
| The Condition (a) | | Δnd | Δn | d predetermined value | d actual value | Δnd predetermined value | Δnd actual value |
| A | first example of condition a) | 0.70 | 0.15 | 6.0 | 5.9 | 0.9 | 0.885 |
| B | first example of condition a) | 0.70 | 0.15 | 6.0 | 5.8 | 0.9 | 0.870 |
| C | second example of condition a) | 0.90 | 0.15 | 6.0 | 5.8 | 0.9 | 0.870 |
| D | fourth example of condition b) | 0.80 | 0.15 | 6.0 | 5.7 | 0.9 | 0.855 |

In liquid crystals A, B and D of the above Tables 5 and 6, the actual n.d is within the range of the oblique lines of Figures 3 and 5, and is inferior compared with the most suitable condition. However, when the voltage was applied to the second cell, an excellent display was obtained.

## EXAMPLE VII

The thicknesses d of the liquid crystal of the first and second cells 10 and 20 are different from the predetermined values. The same experiments as above are conducted. As a result, a voltage is applied to the second cell, so that an excellent display is obtained in the same way as disclosed above.

TABLE 7

| | first cell (Δn = 0.15) | | | | second cell (Δn = 0.1) | | | |
|---|---|---|---|---|---|---|---|---|
| The Condition (a) | d predetermined value | d actual value | Δnd predetermined value | Δnd actual value | d predetermined value | d actual value | Δnd predetermined value | Δnd actual value |
| first | 6.0 | 5.9 | 0.9 | 0.885 | 7.0 | 6.9 | 0.7 | 0.69 |
| example | 6.0 | 6.1 | 0.9 | 0.915 | 7.0 | 7.2 | 0.7 | 0.72 |
| of Condition (a) | 6.0 | 6.1 | 0.9 | 0.915 | 7.0 | 7.3 | 0.7 | 0.73 |
| second | 6.0 | 5.9 | 0.9 | 0.885 | 9.0 | 8.9 | 0.9 | 0.89 |
| example | 6.0 | 5.9 | 0.9 | 0.885 | 9.0 | 9.1 | 0.9 | 0.91 |
| of Condition (a) | 6.0 | 6.1 | 0.9 | 0.915 | 9.0 | 9.3 | 0.9 | 0.93 |

## EXAMPLE VIII

In the liquid crystal display device of Figure 1, the liquid crystal of the first cell 10 comprises 99.2 wt % of a biphenyl group liquid crystal and 0.8 wt % of S-811 made by the Merck Company The liquid crystal of the second cell 20 comprises 98.55 wt % of a biphenyl group liquid crystal and 1.45 wt % of CB-15 made by the British Drug Houses Company. The respective liquid crystal thicknesses (cell thicknesses) of the first and second cells are set to 5.8 µm and 6.4 µm respectively. The angles $\theta 1$ and $\theta 2$ are 45° and 90°, respectively. The left twisted angle T1 of the first cell 10 is set to 180° and the right twisted angle T2 of the second cell 20 is set to 180°. Δ n.d of the first and second cells are 0.87 µm and 0.96 µm, respectively. A voltage (rectangular waveform) of 2.03 V is applied to the second cell and an excellent display is obtained.

As mentioned above, Δ n.d of the second cell is set to a larger value than that of the first cell, and the voltage is applied to the second cell to adjust Δ n.d of the second cell and to correspond to that of the first cell. As a result, an excellent uncoloured black and white display is obtained, in the same way as the above Examples wherein the thickness of the liquid crystal is set to a predetermined value by calculation.

Figures 15 and 16 show the strength of the transmitted light relative to the voltage V applied to the first cell. The conditions of Figures 15 and 16 are set as shown in Table 8. In Figures 15 and 16 "a" indicates the property of the display device according to the present invention, "b" indicates the property of the display device according to the prior art, and "c" indicates the property wherein the voltage applied to the second cell is 0.

TABLE 8

| | | 1st cell | | 2nd cell | | voltage applied to 2nd cell [V] | arrangement of polarizer | | |
|---|---|---|---|---|---|---|---|---|---|
| | | d | Δn•d | d | Δn•d | | angle $\theta_2$ | angle $\theta_1$ | relation between two polarizing plate |
| Fig. 15 | a | 5.8 | 0.87 | 6.4 | 0.96 | 2.03 | 45° | 45° | ⊥ |
| | b | 5.8 | 0.87 | 5.8 | 0.87 | 0 | -45° | 45° | ∥ |
| | c | 5.8 | 0.87 | 6.4 | 0.96 | 0 | 45° | 45° | ⊥ |
| Fig. 16 | a | 5.8 | 0.87 | 6.4 | 0.96 | 1.82 | 45° | 45° | ⊥ |
| | b | 5.8 | 0.87 | 5.8 | 0.87 | 0 | 45° | 45° | ⊥ |
| | c | 5.8 | 0.87 | 6.4 | 0.96 | 0 | 45° | 45° | ⊥ |

In the present invention, the arrangements of polarising plates are the same in Figures 15 and 16, but the voltages applied to the second cell are different from each other. In the prior art, if the arrangement of the polarising plate is not changed, one mode is not switched to another mode. However, in the present invention, it is possible to switch one mode to another electrically.

In multiplex driving, the voltage applied to the liquid crystal is changed between Vx and Vy to select an ON/OFF condition. The relation between the number of duty N and Vy/Vx are expressed by the following equation:-

$$Vy/Vx = \sqrt{\frac{\sqrt{N} + 1}{\sqrt{N} - 1}} \quad \ldots.(1)$$

Therefore, for example, when N = 200, the relation between Vy and Vx is as follows:

Vy / Vx = 1.07

Herein, in the case of "a" shown in Figure 15, since Vth = 1.66 V, Vs = 2.05 V ¦ Vy - Vx ¦ < ¦ Vs - Vth¦ Therefore, a sufficient contrast cannot be obtained. In such a case, if Vy = Vx in the "ON" condition, the display was quite black, so that a maximum contrast ratio was obtained. Therefore, when "a" and "b" are compared in Figure 15, a more excellent contrast can be obtained in "a", which is the embodiment of the present invention.

As apparent from Figures 15 and 16, if the arrangement of the polarising plates is not changed in the prior art, two modes cannot be switched. However, in the present invention, if the voltage applied to the second cell is changed, one mode can be switched to another. More specifically, in the present invention, the display mode (negative and positive) can easily be changed.

## EXAMPLE IX

The arrangement of the polarising plate is the same as in the Example VIII. The thicknesses of the first and second cells are set to 6.0 µm and 6.3 µm respectively. In this case, the same effects as those of Example VIII are obtained.

## EXAMPLE X

The arrangement of the polarising plates is the same as in Example VIII. The thicknesses of the first and second cells are set at 5.6 µm and 6.0 µm respectively. The same effects as that of those of Example VIII are obtained.

## EXAMPLE XI

In all of the above Examples I to XI, the surfaces of the substrates are rubbed in predetermined directions properly to orient the liquid crystal molecules. In the present Example XI, the surfaces of the substrates are obliquely evaporated properly to orient the liquid crystal molecules. In this case, the pre-tilt angle of the liquid crystal molecules is approximately 25° on the respective substrates. The twisted angles of T1 and T2 are set to 270°. The angles $\theta 1$ and $\theta 2$ are set to 45° respectively. The angle $\theta$ is set to 90°. The liquid crystal thicknesses of the first and second cells are set to 5.7 µm and 6.2 µm respectively. In the present Example XI, the same effects as those of the above Examples I to X are obtained.

## EXAMPLE XII

In the liquid crystal display device shown in Figure 1, the liquid crystal of the first cell comprises 98.9 wt % of tolan group liquid crystal and 1.1 wt % of S-811 made by the Merck Company, and the liquid crystal of the second cell 20 comprises 98.8 wt % by tolan group liquid crystal and 1.2 wt % of CB-15 made by the British Drug Houses Company. The left twisted angle T1 of the first cell was set to 230°. The right twisted angle T2 of the second cell was set to 230°. The liquid crystal thickness d of the first cell was set to 4.5 µm. The liquid crystal thicknesses d of the second cell were set to several values (A to E) as shown in Table 9. The other conditions were the same as those of the above Example VIII. The same experiment was conducted.

TABLE 9

| | first cell | | second cell | | voltage applied to second cell | contrast ratio |
|---|---|---|---|---|---|---|
| | d | Δnd | d | Δnd | | |
| A | 4.5 | 0.88 | 4.8 | 0.94 | 2.10 V | 1 : 22 |
| B | 4.5 | 0.88 | 5.5 | 1.07 | 2.22 | 1 : 14 |
| C | 4.5 | 0.88 | 6.4 | 1.25 | 2.37 | 1 : 11 |
| D | 4.5 | 0.88 | 7.4 | 1.44 | 2.54 | 1 : 8 |
| E | 4.5 | 0.88 | 8.3 | 1.62 | 2.15 | 1 : 6 |

The contrast ratio of Table 9 is obtained when the strength of the transmitting light is set to 50% in the OFF condition and the liquid crystal display device is driven at 1/240 duty.

Figures 17 (A) to 17 (E) show the strength of the transmitting light relative to the voltage V applied to the first cell in the above electro-optical devices A to E.

The abscissa indicates the voltage applied to the first cell. The waveform is a rectangular waveform having the frequency of 1 kHZ. Further, the axis of ordinate indicates the strength of the transmitting light when the light amount of the two polarisers is defined as 100%, the two polarisers being adhered to each other and their polarising axes being oriented to a proper direction. In Figures 17 (A) to 17 (E), the dotted line "c" indicates the transmitting ratio of the voltage when no voltage is applied to the second liquid crystal cell. In this case, a good contrast is not obtained and the display is greatly coloured. The line "a" indicates the transmitting ratio of the voltage when the voltage (1 kHz, rectangular waveform) is applied to the voltage, using the same liquid crystal cell as that which gave the dotted line "c". In this case, a sufficient contrast is obtained and the display is not coloured.

Figures 17 (A) to 17 (E) show the maximum limit of the voltage applied to the second cell. If the curved lines "a" in Figures 17 (A) to 17 (E) are compared, the larger Δ n.d of the second cell, then the larger is the amount of the transmitting light when the voltage applied to the first cell is 0, so that a sufficient contrast is not obtained. The right hand end of the Table 9 shows the contrast ratio. If the necessary contrast ratio is 1 : 10, it is assumed that the indemnified limit of Δ n.d of the second liquid crystal cell would be Δ n.d of the first liquid crystal cell plus 0.4 μm by applying the voltage to the second cell.

Figure 18 shows a schematic view of a prior electro-optical device in the form of a prior liquid crystal display device. In Figure 18, there are shown a lower polarising plate 101, an upper polarising plate 102, and a first liquid crystal cell 110 wherein a display is provided by applying the voltage thereto. A liquid crystal is supported by a lower electrode substrate 111 having an electrode 111a at the upper side, and by an upper electrode substrate 112 having an electrode 112a at the lower side. Also shown in Figure 18 are a second liquid crystal cell 120 in which a liquid crystal 123 is supported by a lower substrate 121 and by an upper substrate 122.

In the construction shown in Figure 18, the angle between the liquid crystal molecule axis direction contacted to the lower electrode substrate 111 and the polarising axis (absorbing axis) of the lower polarising plate 101 is generally 20° to 70°. The straight polarising light passes the lower polarising plate 101 and then passes the first liquid crystal cell 110. The straight polarising light is caused to be an oval polarising light by the effect of the refractive index anisotropy Δ n and the liquid crystal thickness d, and the twisted angle of the liquid crystal molecules. The major axis direction of the oval polarising lights are different in respective waveforms. Further, the eccentricities are also different. When the length of the major axis of the oval polarising light is "a" and the minor axis is "b", the eccentricity is expressed by the following equation:-

$$e = \frac{\sqrt{a^2 - b^2}}{a} \leqq 1$$

The oval polarising light passes to the second liquid crystal cell 120. The major axis directions of the

oval polarising light are substantially uniform in respective wavelengths (visible ray range), and the twisted angle of the molecules of the second liquid crystal cell 120, the product Δ n.d (μm) of the refractive index anisotropy Δ n of the second liquid crystal cell 120 and the liquid crystal thickness d, and the angle of molecule axis direction of the liquid crystal molecules contacted to the lower substrate 121 of the second liquid crystal cell 120 and the molecule axis direction of the liquid crystal molecules contacted to the upper electrode substrate 112 of the first liquid crystal cell 110, are set so that the eccentricities "e" of the oval polarising light are close to 1 in respective waveforms (visible ray range).

As a result, prior to passing the second liquid crystal cell 120, the eccentricities of the respective wavelengths are different, and the oval polarising lights (wherein the major axis directions are different in respective wavelengths) pass the second liquid crystal cell 120. Thus, the eccentricities are close to 1 and the polarising lights are oval polarising lights having substantially uniform major axis directions. The light passing the upper polariser is thus caused to be white light.

In the liquid crystal display device shown in Figure 18, as the condition is changed (that is the twisted angle of the liquid crystal Δ n x d is changed) the condition of the second liquid crystal cell must be changed.

As one embodiment of the prior liquid crystal display device, Δ n.d of the first liquid crystal cell is set to approximately 0.9 μm. The left twisted angle of the molecules of the first liquid crystal cell is set to approximately 200° (wherein the twisted direction of the liquid crystal molecules is shown by the direction, as seen from the upper electrode substrate towards to the lower electrode substrate).

Δ n.d of the second liquid crystal cell 120 is set to approximately 0.7 μm. The right twisted angle of the molecules of the second liquid crystal cell 120 is set to approximately 150°. The angle between the polarising axis (absorbing axis) direction of the upper polarising plate and the molecule axis direction of the liquid crystal molecule contacted to the upper substrate 122 of the second liquid crystal cell 120 is set to approximately 40°. The angle between the molecule axis direction of the liquid crystal molecules contacted to the lower substrate 121 of the second liquid crystal cell 120 and the molecule axis direction of the liquid crystal molecules contacted to the upper electrode substrate 112 of the first liquid crystal cell 110 is set to approximately 90°. The angle between the molecule axis direction of the liquid crystal molecule contacted to the lower electrode substrate 111 of the first liquid crystal cell 110 and the polarising axis (absorbing axis) direction of the lower polariser is set to approximately 50°.

Figure 19 shows the spectrum of the transmitting light under "ON/OFF conditions". A selective/nonselective voltage is applied under the multiplex drive of 1/100 duty. The condition where the transmitting ratio is high is defined as the "OFF condition". The condition where the transmitting ratio is lower is defined as "ON condition". In Figure 19, the curve I indicates "OFF condition", and the curve II indicates the "ON condition". The strength of the transmitting light of the axis of ordinate is indicated by a proper AU (Arbitrary Unit).

The effects of the present invention will readily be appreciated from the above description with reference to Examples I to XII and Figures 1 to 19. As mentioned above, according to the present invention, electrodes are also provided in the second cell. Therefore, if the display is coloured by the change of the surrounding temperature or by manufacturing error of the liquid crystal thickness, it is possible to improve the display quality without any colour by applying the voltage between electrodes of the second cell. Furthermore, it is possible to change the background colour or the display colour by applying an appropriate voltage to the second cell, whereby it is possible to broaden the effective display range and to increase the design flexibility of the electronic apparatus.

Furthermore, Δ n.d of the second cell may be set to the larger than that of the first cell, the voltage may be applied to the second cell, and Δ n.d of the second cell may be adjusted to correspond to that of the first cell. This construction can eliminate the colour in the same way as the construction that the liquid crystal thicknesses of the first and second cells are calculated and prepared so that Δ n.d of the first cell corresponds to that of the second cell. Thus, the permitted range of the difference of the liquid crystal thickness is broadened and the yield is improved, thereby enabling the electro-optical device easily to be manufactured and the manufacturing cost to be reduced. The contrast of the display portion is greatly improved, and, since the display mode (negative/positive) can be reversed in the display portion including the peripheral portions which are not scanned, it is possible to reverse the display mode easier than that of the other prior processes, and is possible to make the display look more better at the time of reversing the display mode.

## Claims

1. An electro-optical device characterised by comprising: a first liquid crystal (10) cell having a first liquid crystal layer (13) positioned between electrode substrates (11, 12) which are opposed to each other, at least one second liquid crystal cell (20) having a second liquid crystal layer (23) positioned between two substrates (21, 22) which are opposed to each other, and electrodes (21a, 22a) which are disposed on the facing surfaces of the two substrates of the second liquid crystal cell.

2. An electro-optical device according to claim 1 characterised in that there are at least two of the second liquid crystal cells (20, 30).

3. An electro-optical device according to claim 1 or claim 2, characterised in that the contacted substrates (12, 21) of the adjacent liquid crystal cells (10, 20) are integrally formed as one substrate.

4. An electro-optical device according to any one of the preceding claims characterised in that two or more electrodes (11a, 12a; 21a, 22a) are provided at at least one of the opposing substrates (11, 12; 21,22) of at least one of the second liquid crystal cells (10; 20).

5. An electro-optical device as claimed in claim 1 or claim 2, characterised in that the product ( Δ n.d) of the refractive index anisotropy "n" and the thickness "d" of the liquid crystal layer (23) of the second liquid crystal cell (20) in a non-voltage condition is the same as or more than Δ n.d of the first liquid crystal cell (10) in a non-voltage condition.

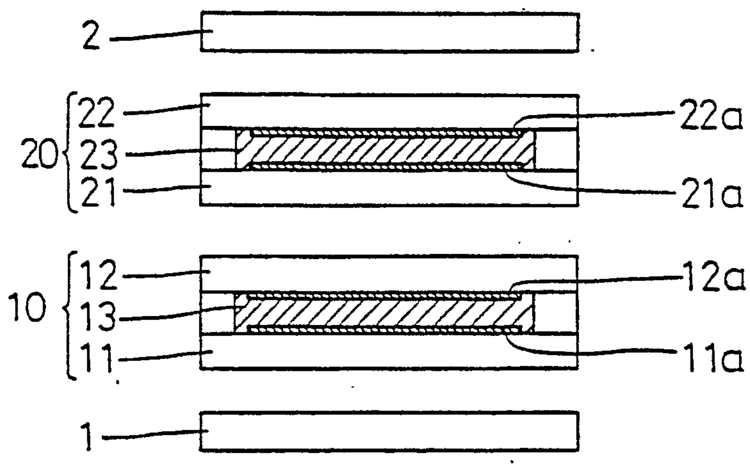
2
22
20
23
21
22a
21a
12
10
13
11
12a
11a
1

Fig. 1

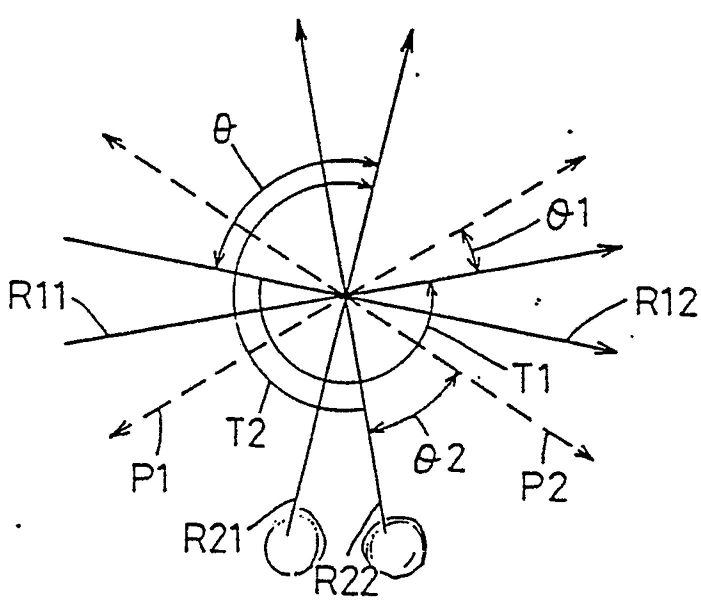
θ
θ1
R11
R12
T1
T2
θ2
P1
P2
R21
R22

Fig. 2

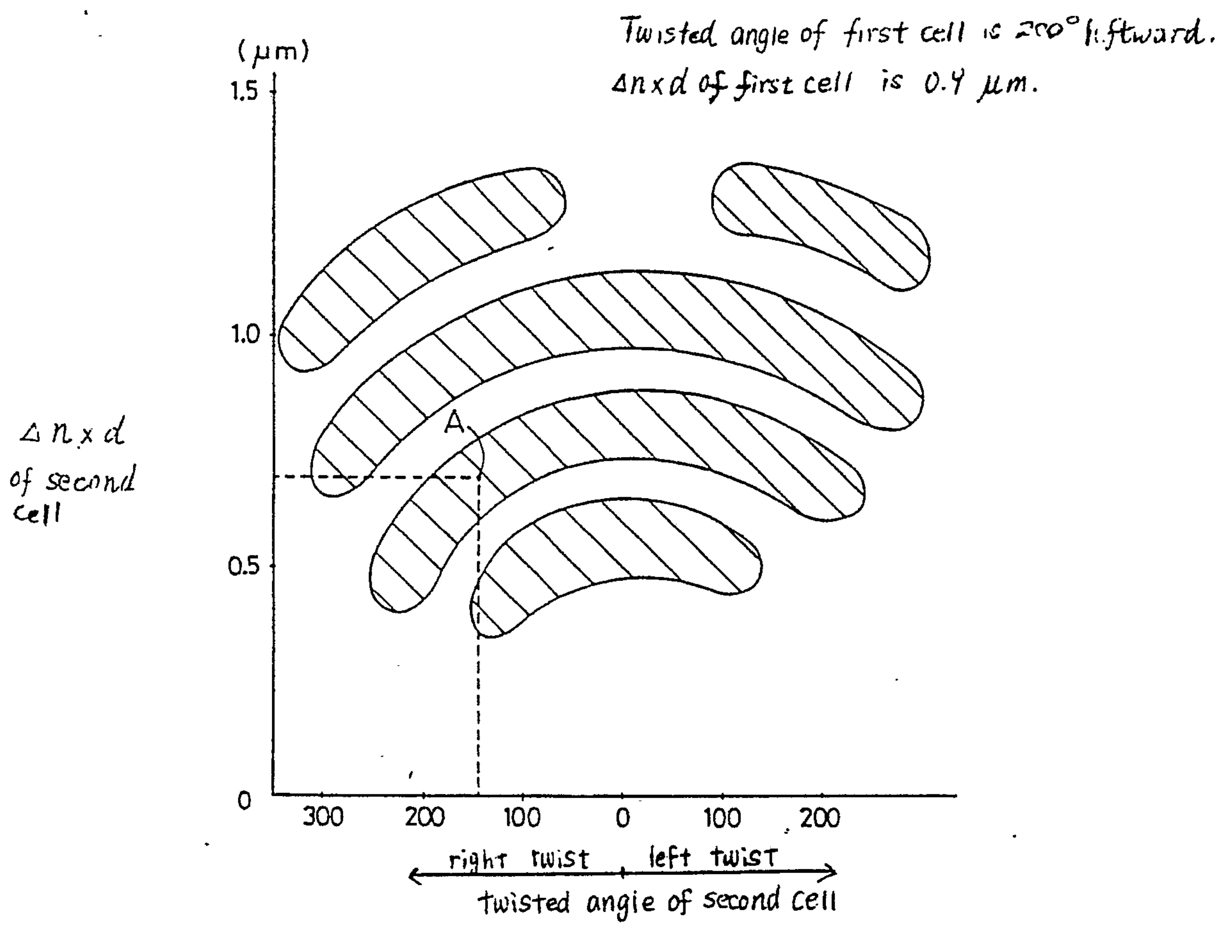
Twisted angle of first cell is 200° leftward.
Δn×d of first cell is 0.4 μm.
(μm)
1.5
1.0
0.5
0
Δn×d of second cell
A
300
200
100
0
100
200
right twist
left twist
twisted angle of second cell

Fig. 3

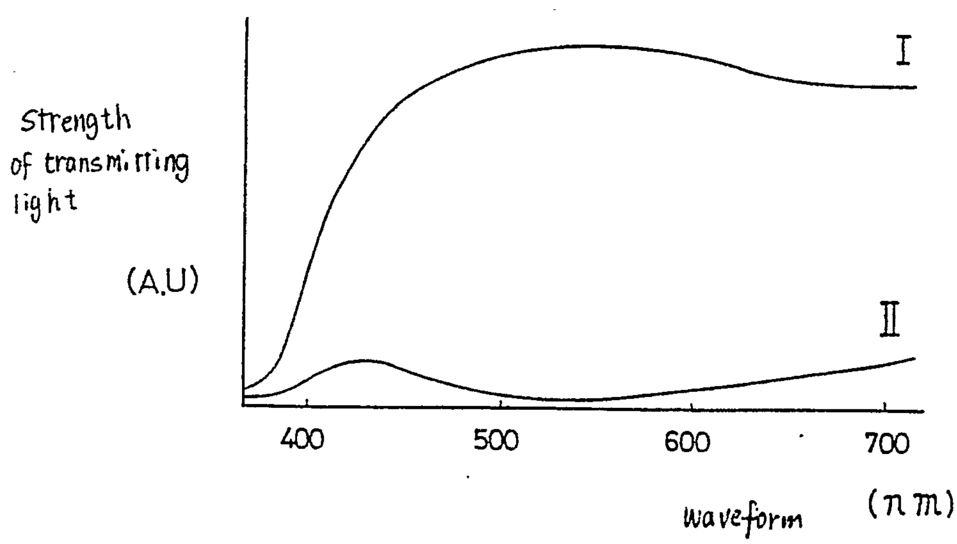
Strength of transmitting light
(A.U)
I
II
400
500
600
700
waveform
(nm)

Fig. 4

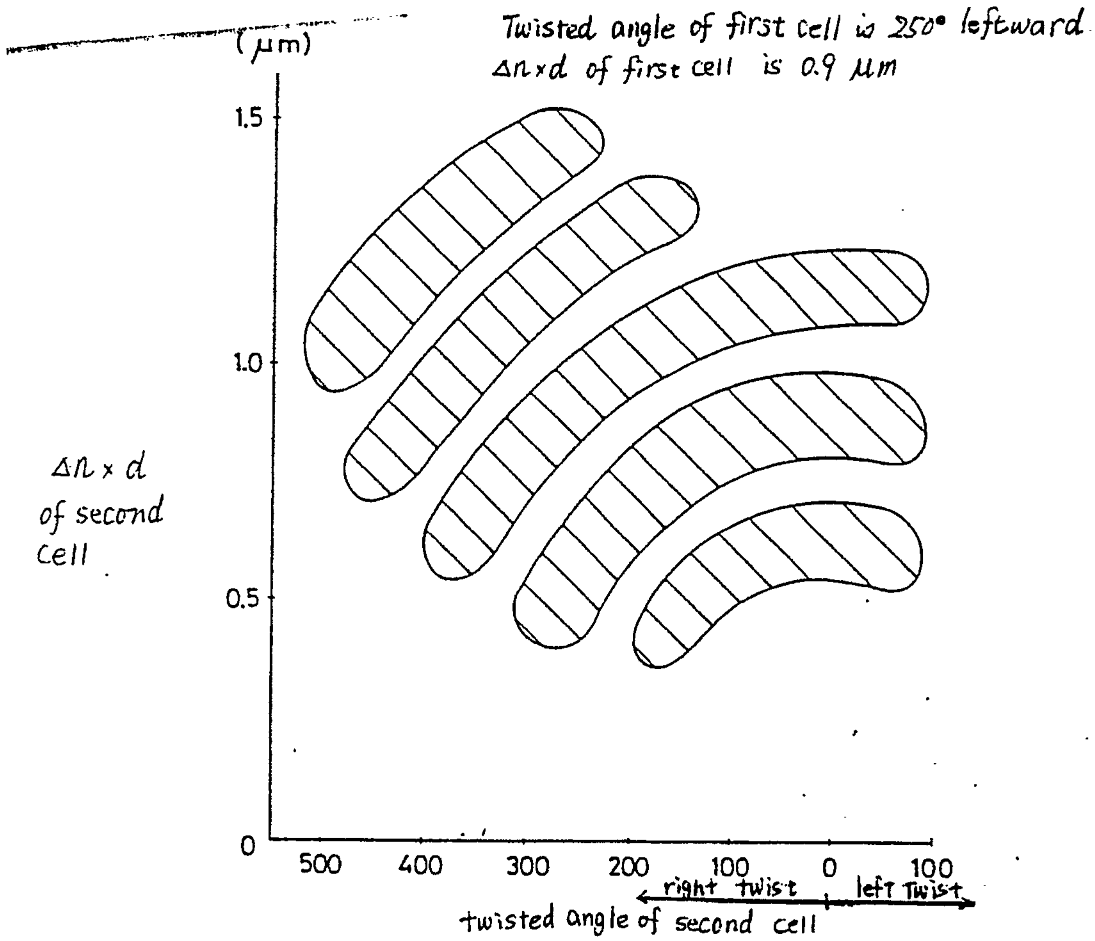
(μm)
Twisted angle of first cell is 250° leftward
Δn×d of first cell is 0.9 μm
1.5
1.0
0.5
0
Δn × d of second cell
500 400 300 200 100 0 100
right twist
left twist
twisted angle of second cell

Fig. 5

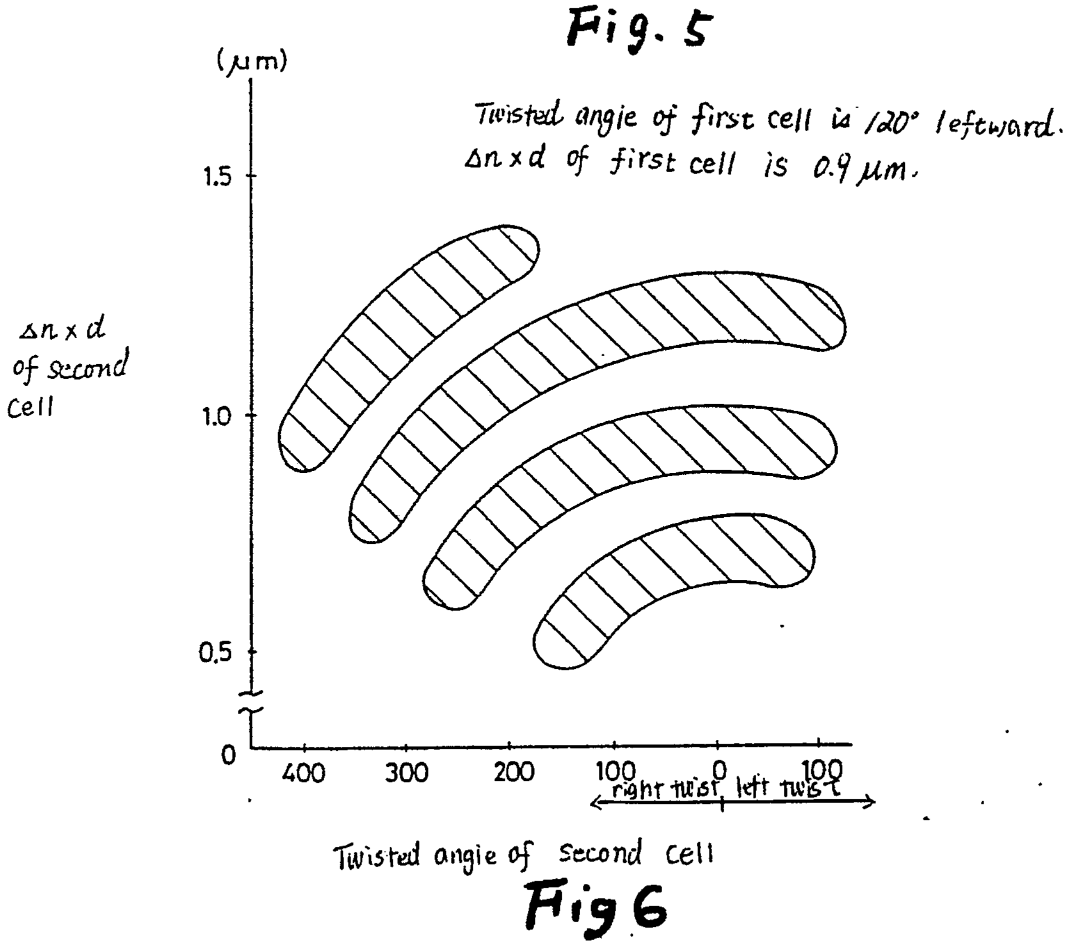
(μm)
Twisted angle of first cell is 120° leftward.
Δn×d of first cell is 0.9 μm.
1.5
1.0
0.5
0
Δn × d of second cell
400 300 200 100 0 100
right twist
left twist
Twisted angle of second cell

Fig 6

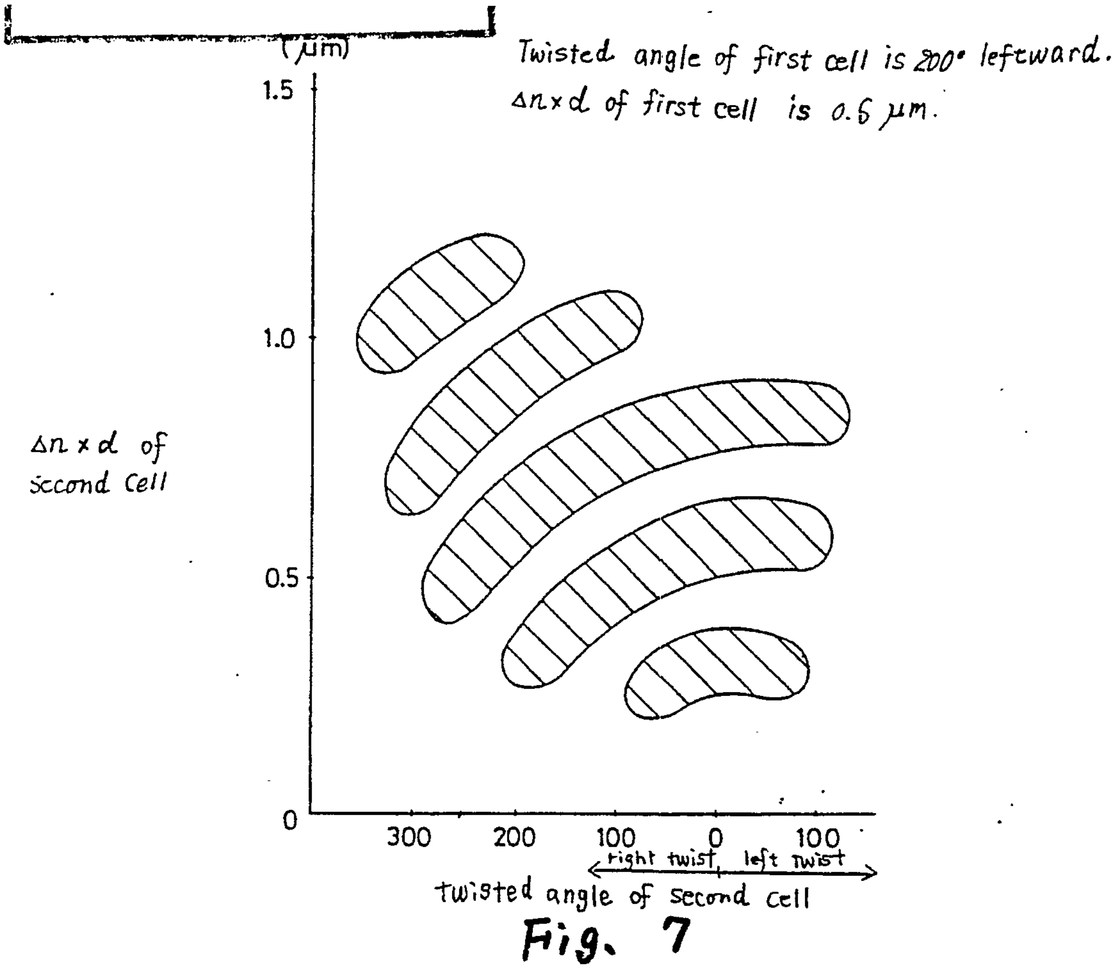
Twisted angle of first cell is 200° leftward.
Δn×d of first cell is 0.6 μm.
(μm)
1.5
1.0
0.5
0
Δn×d of second cell
300
200
100
0
100
right twist
left twist
twisted angle of second cell

Fig. 7

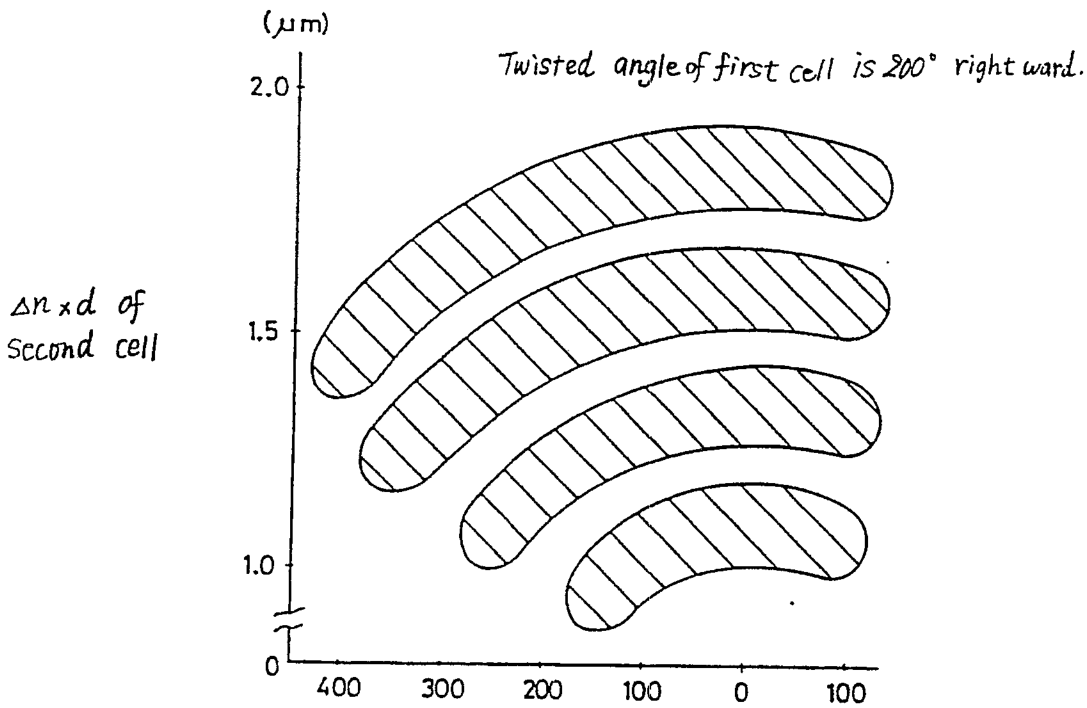
(μm)
Twisted angle of first cell is 200° right ward.
2.0
1.5
1.0
0
Δn×d of Second cell
400
300
200
100
0
100

Fig 8

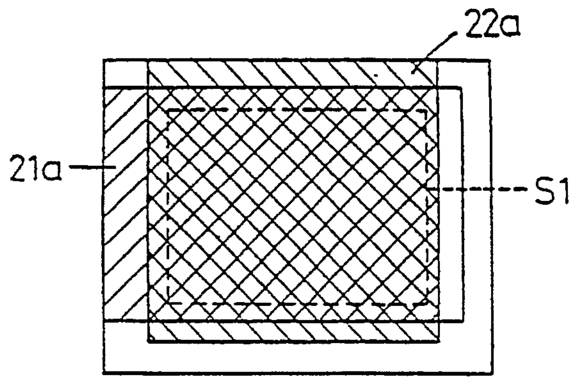


Fig. 9

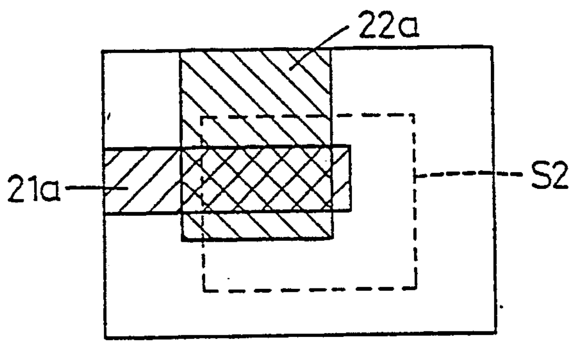


Fig. 10

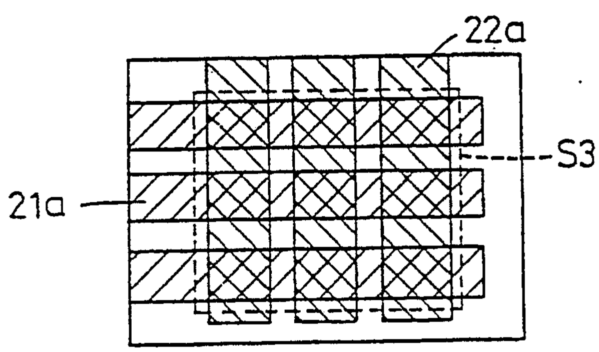


Fig. 11

Nouvellement

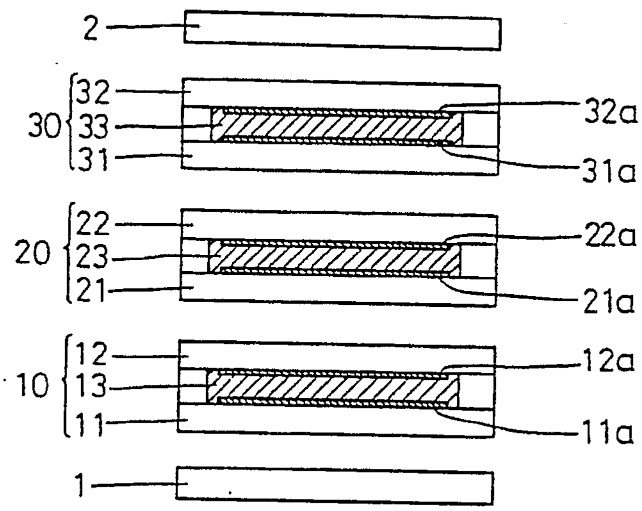
2
30
32
33
31
32a
31a
20
22
23
21
22a
21a
10
12
13
11
12a
11a
1

Fig. 12

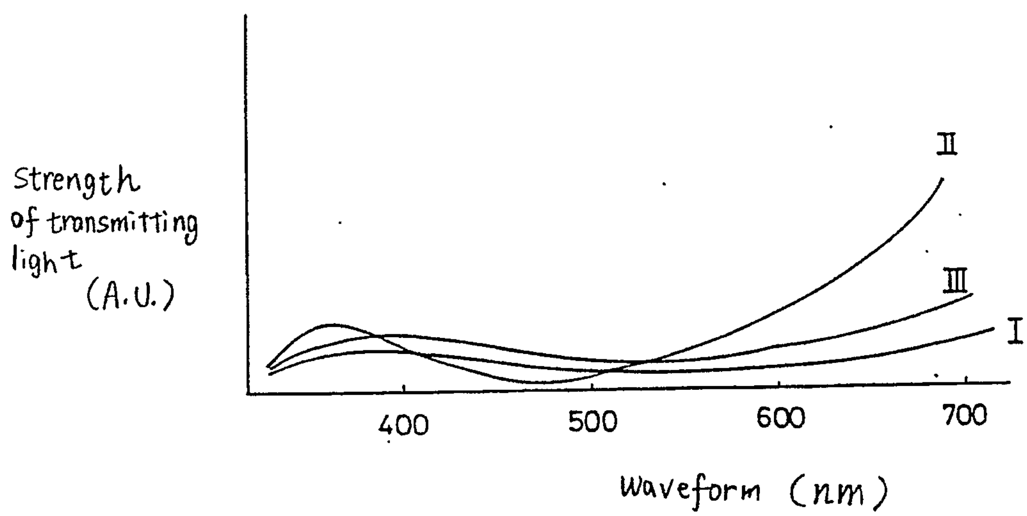
Strength of transmitting light (A.U.)
II
III
I
400
500
600
700
Waveform (nm)

Fig. 13

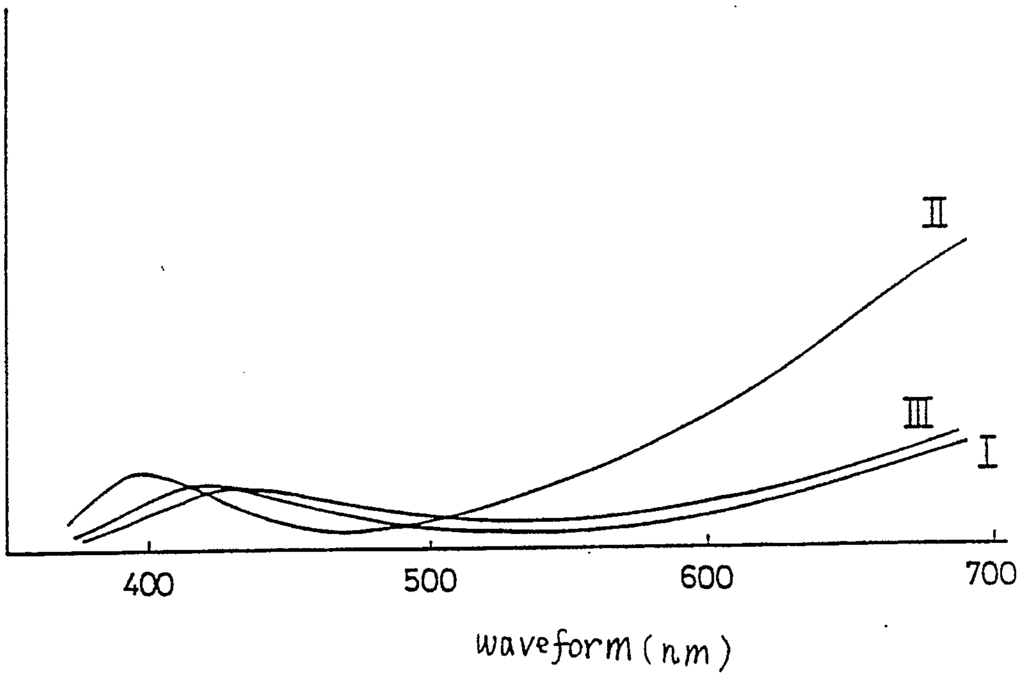


Fig. 14 (A)

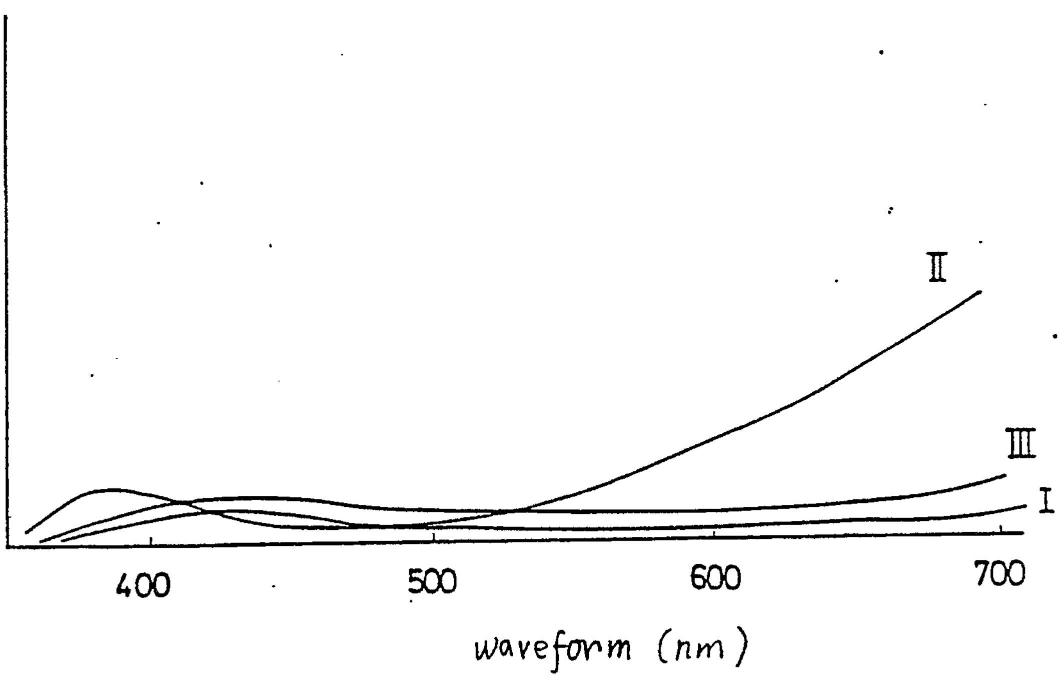


Fig. 14 (B)

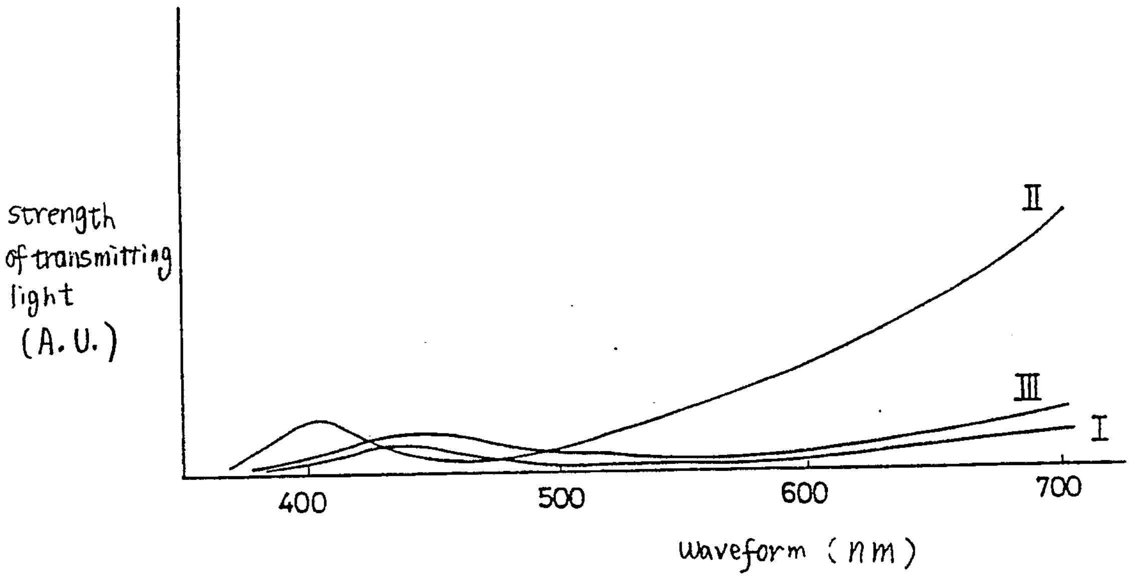


Fig. 14(C)

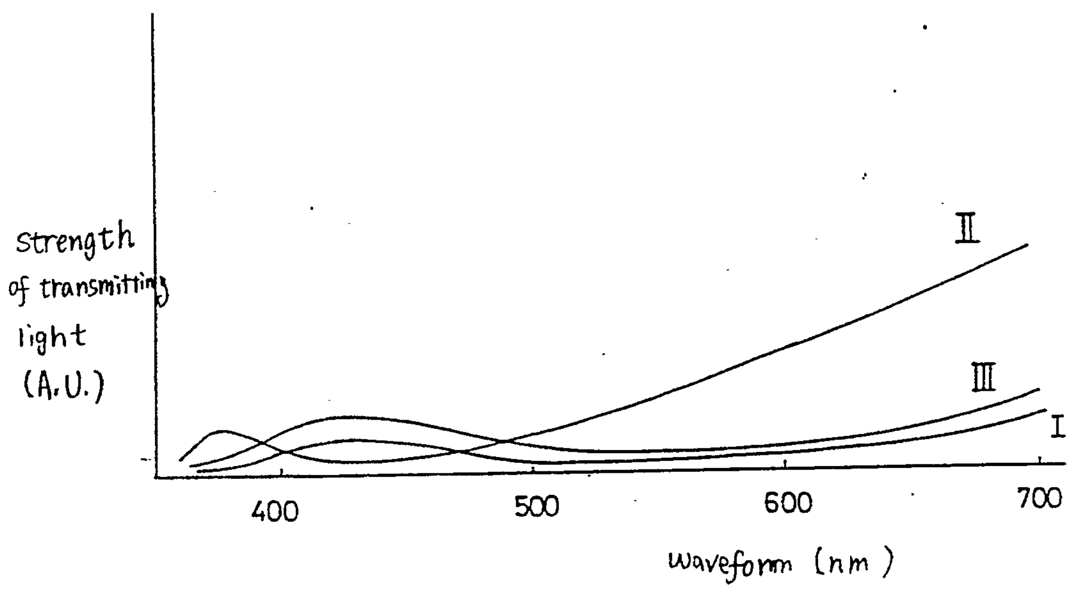


Fig. 14(D)

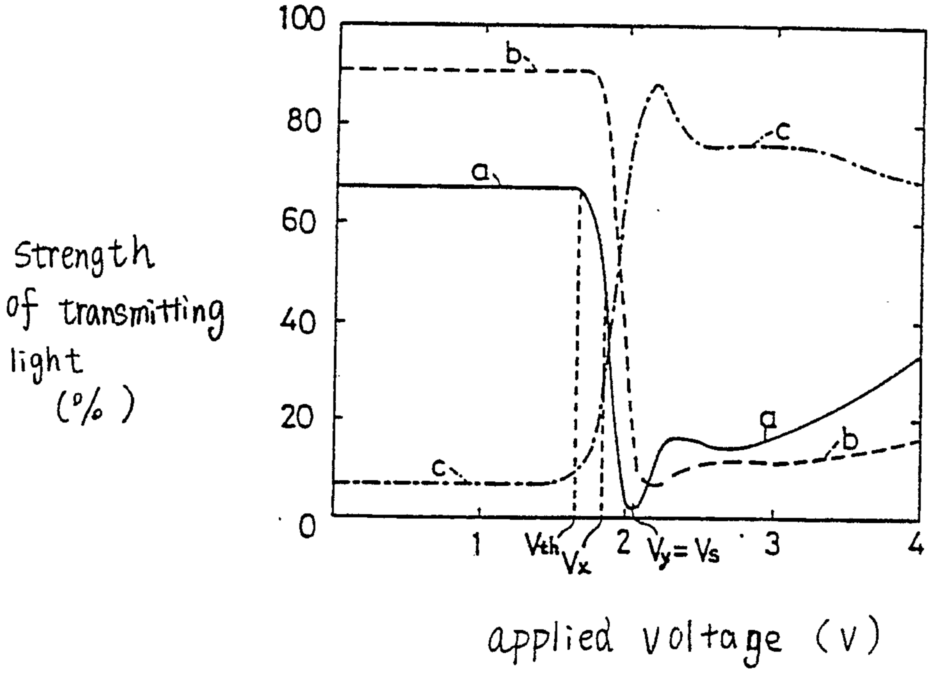
100
80
60
40
20
0
Strength of transmitting light (%)
a
b
c
1
Vth
Vx
2
Vy=Vs
3
4
applied voltage (V)

Fig. 15

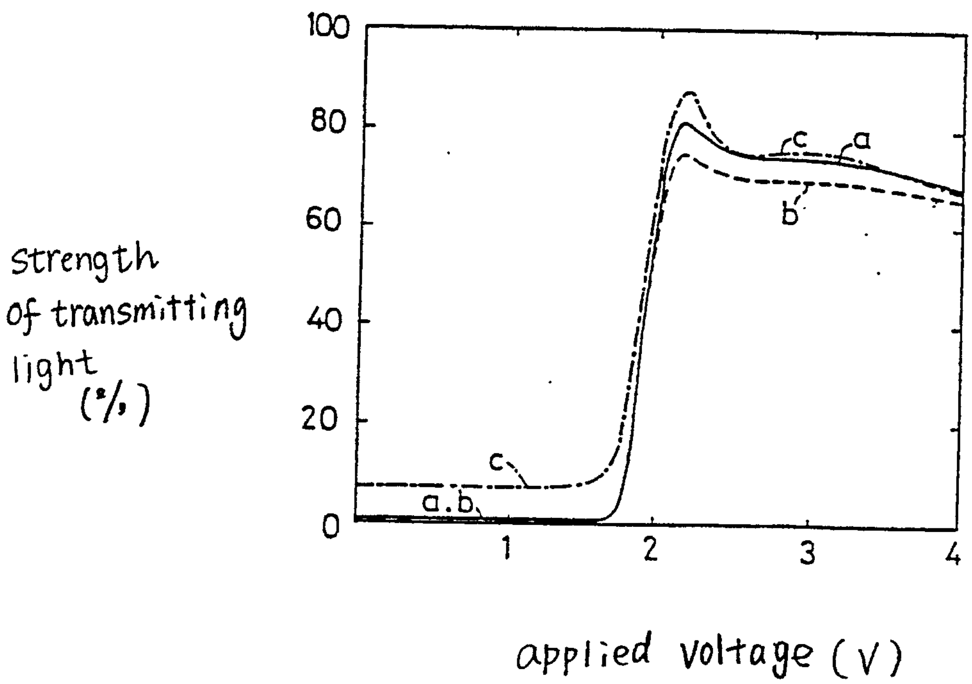
100
80
60
40
20
0
strength of transmitting light (%)
a
b
c
a.b
1
2
3
4
applied voltage (V)

Fig. 16

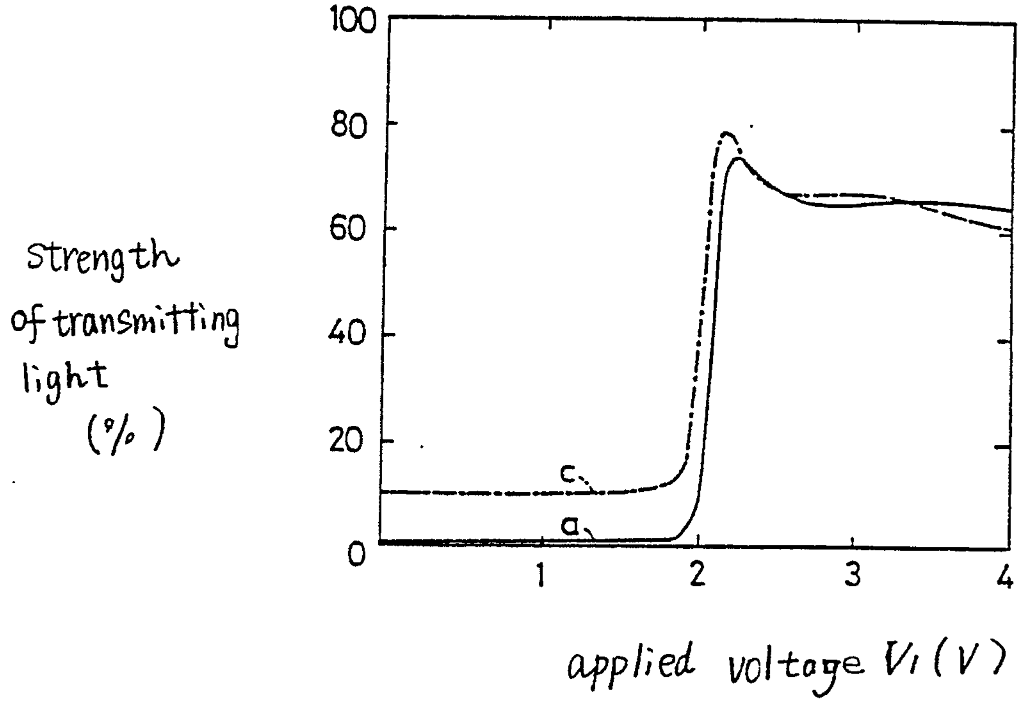


Fig. 17 (A)

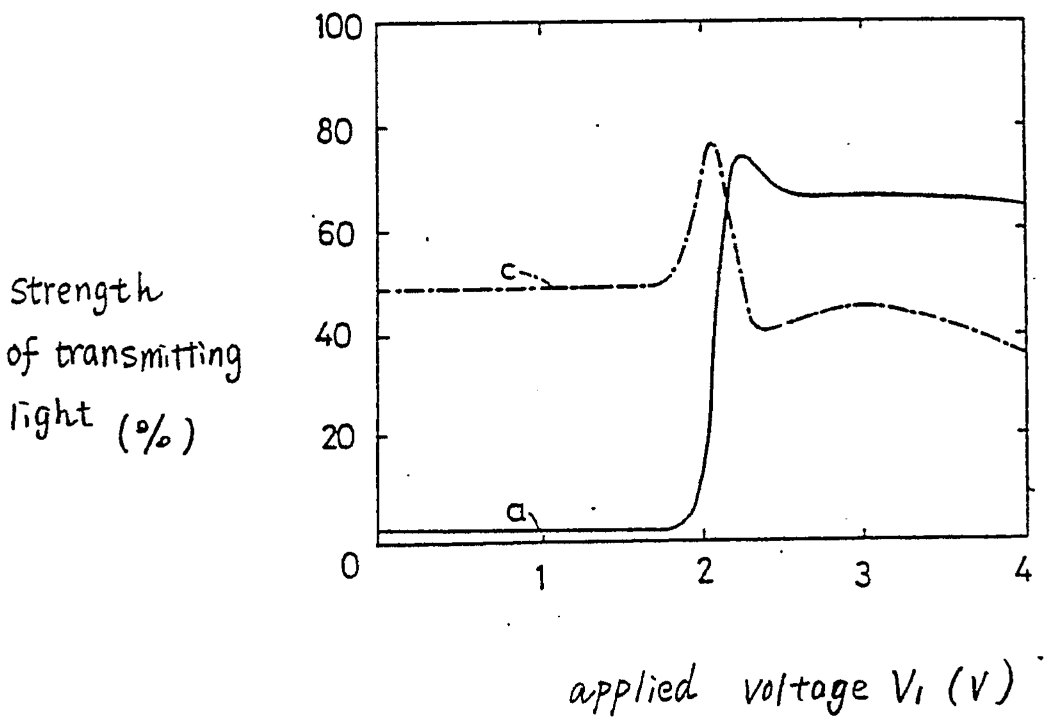


Fig. 17 (B)

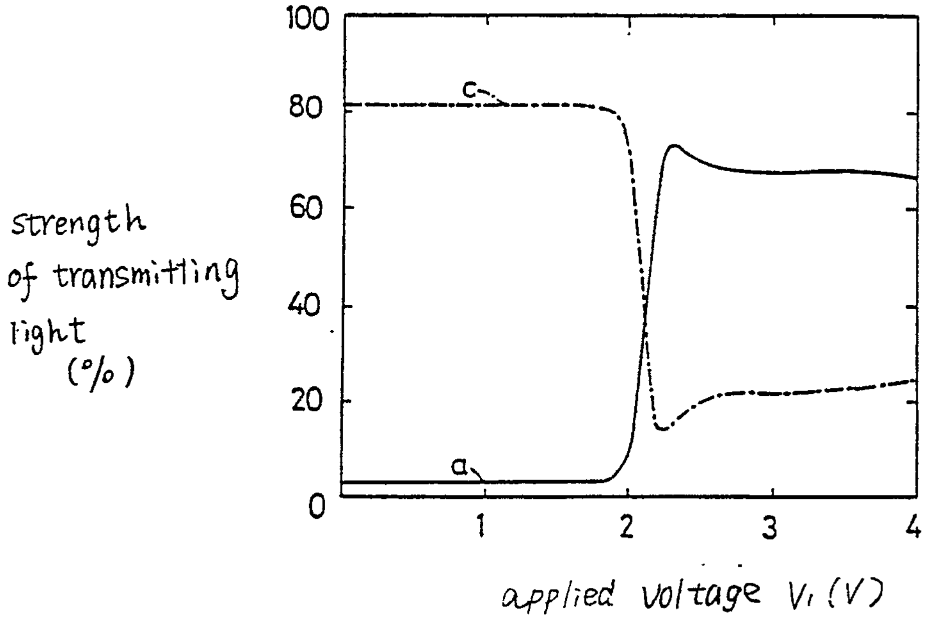


Fig. 17(C)

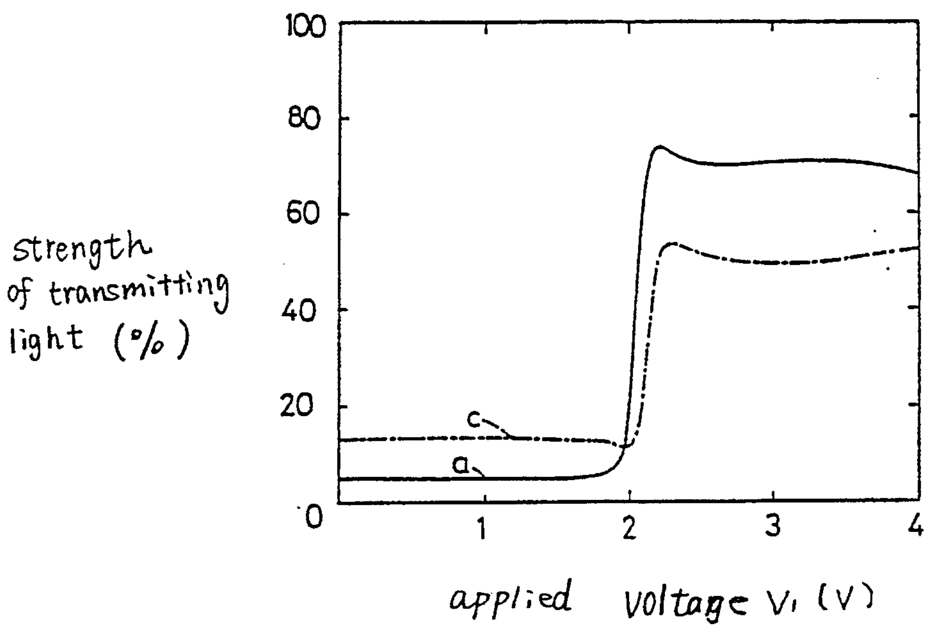


Fig. 17(D)

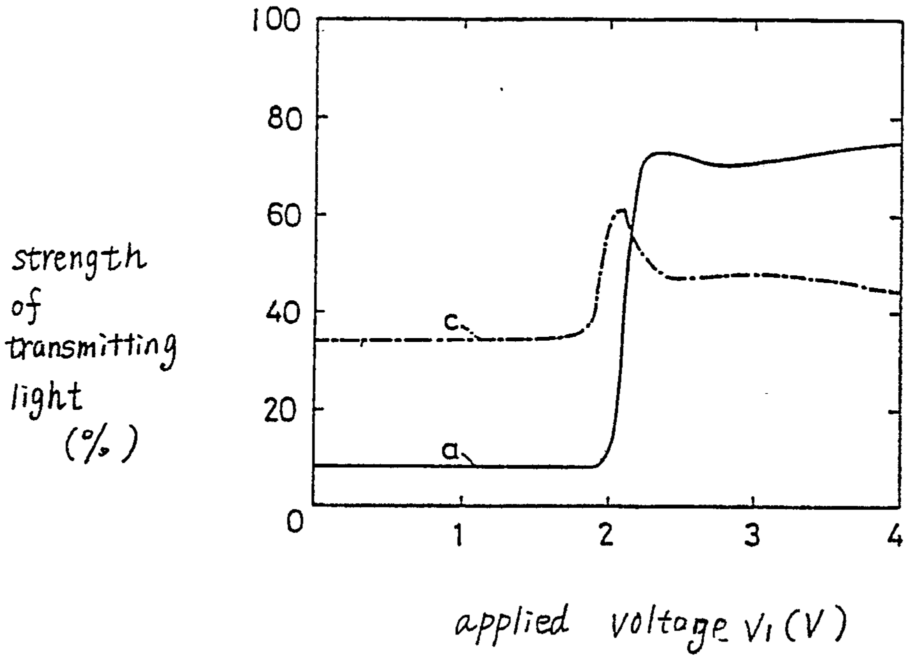
100
80
60
40
20
0
1
2
3
4
c
a
strength of transmitting light (%)
applied voltage V1 (V)

Fig. 17(E)

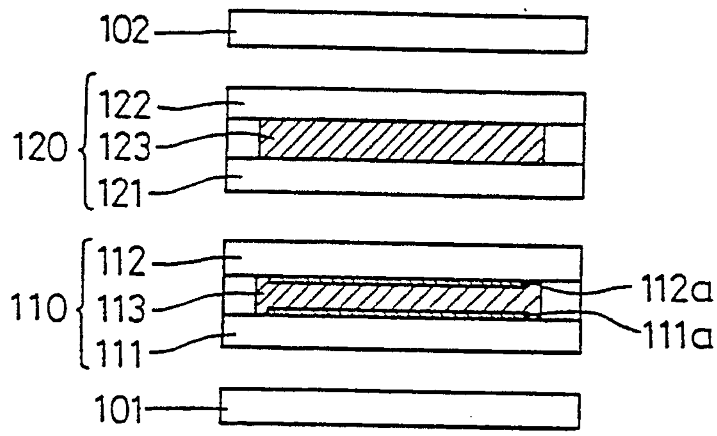
102
122
120
123
121
112
110
113
111
112a
111a
101

Fig. 18

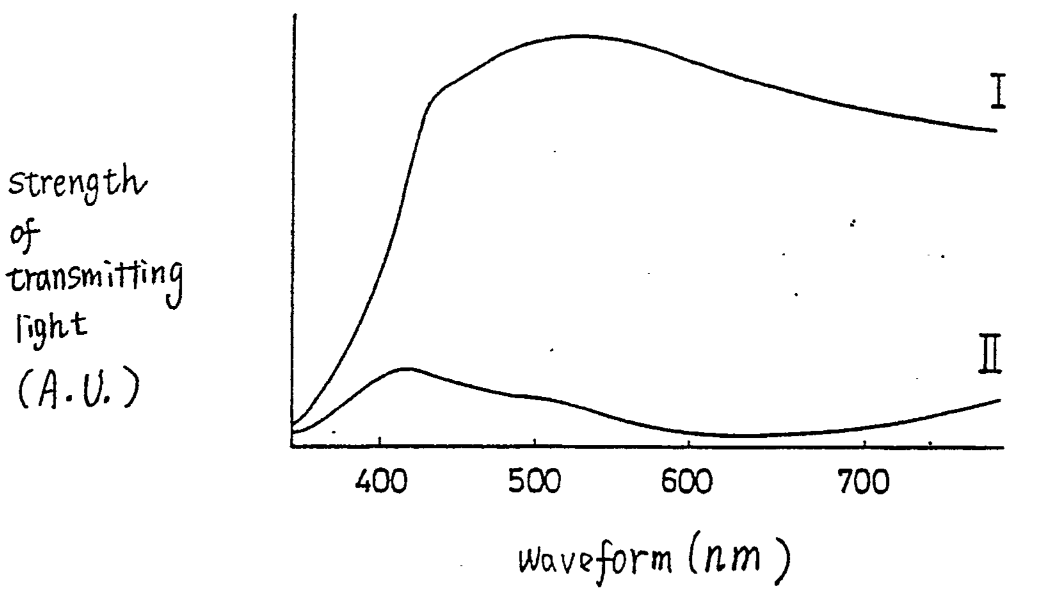
strength
of
transmitting
light
(A.U.)
I
II
400
500
600
700
waveform (nm)

Fig. 19

European Patent Office

# EUROPEAN SEARCH REPORT

Application Number

EP 89 30 4070

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | PATENT ABSTRACTS OF JAPAN, vol. 11, no. 383 (P-646)[2830], 15th December 1987; & JP-A-62 150 329 (STANLEY ELECTRIC CO. LTD) 04-07-1987 * Abstract * | 1,3-5 | G 02 F 1/133 |
| P,X | EP-A-0 320 283 (SEIKO EPSON CO.) * Abstract; claims 1,6-8; figures 1,25; pages 5-6, tables 2-6 * | 1,45 | |
| A | EP-A-0 246 842 (SEIKO EPSON CO.) * Abstract; page 5, examples 1,2; figure 1 * | 1,5 | |
| A | EP-A-0 022 217 (STANLEY ELECTRIC CO.) * Abstract; figures 2-3 * | 1-2 | |

TECHNICAL FIELDS SEARCHED (Int. Cl.5)

G 02 F

The present search report has been drawn up for all claims

| Place of search | Date of completion of the search | Examiner |
|---|---|---|
| THE HAGUE | 16-11-1989 | FARNESE G.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document